# EUROPÄISCHE PATENTANMELDUNG

(11) **EP 4 640 404 A1**
(43) Veröffentlichungstag der Anmeldung: **29.10.2025**
(21) Anmeldenummer: 25165649.2
(22) Anmeldetag: 24.03.2025
(51) Int. Cl.: B29C 48/32, B29C 48/25, B29C 48/30, B29C 48/92, B29C 48/09, B29C 48/325, B29C 48/10

(54) **VORRICHTUNG ZUR ZENTRIERUNG EINES EXTRUSIONSWERKZEUGS ZUR EXTRUSION EINES EXTRUSIONSMATERIALS**

(30) Priorität: 25.04.2024 DE 102024111666
(71) Anmelder: Hans Weber Maschinenfabrik GmbH, 96317 Kronach (DE)
(72) Erfinder: Vießmann, Rainer, 96317 Kronach (DE)
(74) Vertreter: Hafner & Kohl PartmbB

(57) **Zusammenfassung**

Vorrichtung (10) zur Zentrierung eines Extrusionswerkzeugs (20) zur Extrusion eines Extrusionsmaterials.

## Beschreibung

Vorrichtung zur Zentrierung eines Extrusionswerkzeugs zur Extrusion eines Extrusionsmaterials

Die Erfindung betrifft eine Vorrichtung zur Zentrierung eines Extrusionswerkzeugs zur Extrusion eines Extrusionsmaterials, insbesondere eines Kunststoffmaterials.

Entsprechende Vorrichtungen zur Zentrierung eines Extrusionswerkzeugs zur Extrusion eines Extrusionsmaterials, wie z. B. einer Extrusionsdüse einer Extrusionseinrichtung, sind aus dem Stand der Technik in unterschiedlichen Ausführungen dem Grunde nach bekannt.

Ein Beispiel einer entsprechenden Vorrichtung zur Zentrierung eines Extrusionswerkzeugs ist in dem Dokument DE 42 43 285 A1 beschrieben.

Verbesserungswürdig an den bekannten Vorrichtungen ist insbesondere der Umstand, dass diese nicht geeignet respektive konfiguriert sind, an bestehenden Extrusionseinrichtungen, die ein oder mehrere zu zentrierende Extrusionswerkzeuge umfassen, nachgerüstet werden zu können.

Hiervon ausgehend liegt der vorliegenden Erfindung die Aufgabe zugrunde, eine demgegenüber verbesserte Vorrichtung zur Zentrierung eines Extrusionswerkzeugs zur Extrusion eines Extrusionsmaterials anzugeben.

Die Aufgabe wird durch eine Vorrichtung zur Zentrierung eines Extrusionswerkzeugs zur Extrusion eines Extrusionsmaterials, insbesondere eines Kunststoffmaterials gemäß dem vorliegenden unabhängigen Anspruch 1 gelöst. Die hierzu abhängigen Ansprüche betreffen mögliche Ausführungsformen der Vorrichtung.

Ein erster Aspekt der Erfindung betrifft eine Vorrichtung zur Zentrierung eines Extrusionswerkzeugs zur Extrusion eines Extrusionsmaterials, insbesondere eines Kunststoffmaterials. Die Vorrichtung ist sonach im Allgemeinen dazu eingerichtet, ein Extrusionswerkzeug zur Extrusion eines Extrusionsmaterials, insbesondere eines Kunststoffmaterials, wie z. B. eine Extrusionsdüse, welche typischerweise einen Bestandteil einer Extrusionseinrichtung bildet, zu zentrieren. Unter einem Zentrieren des Extrusionswerkzeugs ist insbesondere ein Ausrichten des Extrusionswerkzeugs bezüglich einer Referenzachse, wie z. B. einer Symmetrie- bzw. Zentralachse, eines Bauteils, insbesondere eines rotationssymmetrischen Bauteils einer Extrusionseinrichtung, wie z. B. einer Extruderschnecke, eines Extruderzylinders oder eines entsprechenden Rohrkopfs, zu verstehen. Konkret kann ein Ausrichten ein koaxiales Anordnen einer Symmetrie- bzw. Zentralachse des zu zentrierenden Extrusionswerkzeugs bezüglich einer entsprechenden Referenzachse beinhalten.

Die Vorrichtung umfasst ein oder mehrere Zentrierelemente, welche eingerichtet sind, eine Zentrierkraft auf ein zu zentrierendes Extrusionswerkzeug auszuüben. Die ein oder mehreren Zentrierelemente sind sonach derart konfiguriert, um mit einem zu zentrierenden Extrusionswerkzeug zusammenzuwirken, um eine Zentrierung des Extrusionswerkzeugs herbeizuführen. Wie sich im Weiteren ergibt, weist die Vorrichtung typischerweise wenigstens zwei Zentrierelemente auf, welche eingerichtet sind, zusammenzuwirken, um eine Zentrierkraft auf ein zu zentrierendes Extrusionswerkzeug auszuüben.

Die Vorrichtung umfasst weiter eine, gegebenenfalls kurz als Gehäuse bezeichenbare, ein- oder mehrteilig ausgeführte Gehäuseeinrichtung. Die ein oder mehreren Zentrierelemente sind typischerweise an oder in der Gehäuseeinrichtung angeordnet oder ausgebildet. Die Gehäuseeinrichtung kann hierfür einen auch als Aufnahmeraum bezeichenbaren Gehäuseraum aufweisen, an oder in welchem insbesondere die ein oder mehreren Zentrierelemente angeordnet oder ausgebildet sind. Ergänzend können ein oder mehrere weitere Funktionskomponenten der Vorrichtung an oder in der Gehäuseeinrichtung, d. h. insbesondere an oder in dem Gehäuseraum, angeordnet oder ausgebildet sein. Der Gehäuseraum kann nach außen abgeschlossen sein, sodass die in dem Gehäuseraum angeordneten oder ausgebildeten Funktionskomponenten der Vorrichtung gegenüber äußeren Einflüssen, wie z. B. mechanischen, thermischen und/oder klimatischen Einflüssen, geschützt sind; insgesamt liegt damit auch eine baulich hochintegrierte Baugruppe vor.

Die Gehäuseeinrichtung weist ein oder mehrere Befestigungsschnittstellen auf, vermittels welcher die Gehäuseeinrichtung, d. h. im Allgemeinen die Vorrichtung, an einem zu zentrierenden Extrusionswerkzeug oder an einer ein zu zentrierendes Extrusionswerkzeug aufweisenden Extrusionseinrichtung befestigbar ist. Die Befestigungsschnittstellen sind sonach eingerichtet, die Gehäuseeinrichtung bzw. die Vorrichtung an einem zu zentrierenden Extrusionswerkzeug oder an einer ein zu zentrierendes Extrusionswerkzeug aufweisenden Extrusionseinrichtung zu befestigen. Derart ist es auf einfache und praktikable Weise möglich, die Vorrichtung auch an einem bestehenden Extrusionswerkzeug bzw. an einer bestehenden, ein zu zentrierendes Extrusionswerkzeug aufweisenden Extrusionseinrichtung zu befestigen und diese sonach mit der Vorrichtung und damit im Allgemeinen einer Möglichkeit zur Zentrierung eines Extrusionswerkzeugs nachzurüsten.

Die ein oder mehreren Befestigungsschnittstellen können insbesondere eingerichtet sein, die Gehäuseeinrichtung bzw. die Vorrichtung, insbesondere beschädigungs- bzw. zerstörungsfrei, lösbar, an einem zu zentrierenden Extrusionswerkzeug oder an einer ein zu zentrierendes Extrusionswerkzeug aufweisenden Extrusionseinrichtung zu befestigen. Die ein oder mehreren Befestigungsschnittstellen können hierfür insbesondere eingerichtet sein, die Gehäuseeinrichtung bzw. die Vorrichtung, insbesondere beschädigungs- bzw. zerstörungsfrei lösbar, z. B. über form- und/oder kraftschlüssige Befestigungsarten an einem zu zentrierenden Extrusionswerkzeug oder an einer ein zu zentrierendes Extrusionswerkzeug aufweisenden Extrusionseinrichtung zu befestigen; bei den ein oder mehreren Befestigungsschnittstellen kann es sich sonach z. B. um Form- und/oder Kraftschlusselemente handeln bzw. können die ein oder mehreren Befestigungsschnittstellen ein oder mehrere Form- und/oder Kraftschlusselemente umfassen. Entsprechende Form- und/oder Kraftschlusselemente können z. B. sein bzw. umfassen: Klemmelemente, Rastelemente, Schnappelemente, Spannelemente, Schraubelemente oder Nietelemente. Die Gehäuseeinrichtung bzw. die Vorrichtung lässt sich sonach z. B. über eine Klemm-, Rast-, Schnapp-, Spann, Schraub- oder Nietverbindung an einem zu zentrierenden Extrusionswerkzeug oder an einer ein zu zentrierendes Extrusionswerkzeug aufweisenden Extrusionseinrichtung zu befestigen.

Der Gehäuseraum der Gehäuseeinrichtung kann ringartig bzw. -förmig ausgebildet sein respektive eine ringartige bzw. -förmige Grundform aufweisen. Entsprechendes kann auch für die Gehäuseeinrichtung gelten, mithin kann auch die Gehäuseeinrichtung ringartig bzw. -förmig ausgebildet sein respektive eine ringartige bzw. -förmige Grundform aufweisen. Die Querschnittsgeometrie des Gehäuseraums bzw. der Gehäuseeinrichtung kann z. B. vieleckig, insbesondere viereckig, sein; derart ist typischerweise ausreichend Platz gegeben, um die ein oder mehreren Zentrierelemente sowie gegebenenfalls zusätzliche weitere Funktionskomponenten der Vorrichtung in dem Gehäuseraum anzuordnen oder auszubilden.

Die ein oder mehreren Zentrierelemente können z. B. als Exzenterelemente, d. h. z. B. als Exzenterringe, ausgebildet sein oder solche umfassen. Insbesondere kann die Vorrichtung zwei ineinander greifende Exzenterelemente umfassen, nämlich ein gegebenenfalls auch als inneres Exzenterelement bezeichenbares erstes Exzenterelement und ein gegebenenfalls auch als äußeres Exzenterelement bezeichenbares zweites Exzenterelement. Das erste Exzenterelement kann einen exzentrisch ausgebildeten ersten Ring bzw. Ringabschnitt aufweisen oder als solcher ausgebildet sein. Das zweite Exzenterelement kann ebenso einen exzentrisch ausgebildeten zweiten Ring bzw. Ringabschnitt aufweisen oder als solcher ausgebildet sein. Die beiden exzentrisch ausgebildeten Ringe bzw. Ringabschnitte sind typischerweise miteinander gekoppelt. Insbesondere kann der erste Ring bzw. Ringabschnitt, diesen innenumfangsseitig kontaktierend innerhalb des zweiten Rings bzw. Ringabschnitts angeordnet sein, sodass sich ein Verdrehen des ersten Rings bzw. Ringabschnitts, d. h. im Allgemein des ersten Exzenterelements, relativ zu dem zweiten Ring bzw. Ringabschnitt, d. h. im Allgemeinen des zweiten Exzenterelements, aufgrund der exzentrischen Geometrie auf den zweiten Ring bzw. Ringabschnitt, d. h. im Allgemeinen das zweite Exzenterelement, auswirkt, und umgekehrt. Zwischen den Kontaktflächen der beiden Ringe bzw. Ringabschnitte, d. h. im Allgemeinen der beiden Exzenterelemente, können, etwa zur Reduzierung von Reibung und Verschleiß, ein oder mehrere Gleitelemente bzw. -flächen oder Wälzlager angeordnet oder ausgebildet sein.

Die Exzenterelemente können jeweils ein oder mehrere Antriebsabschnitte aufweisen, welche eingerichtet sind, z. B. durch einen mechanischen Eingriff, mit einem einer Antriebseinrichtung zugeordneten Antriebselement, wie z. B. einem Band, einer Kette oder einem Riemen, zusammenzuwirken, um eine das jeweilige Exzenterelement in eine Drehbewegung versetzende Antriebskraft bzw. ein entsprechendes Moment auf das jeweilige Exzenterelement zu übertragen. Jeweilige Antriebsabschnitte können, gegebenenfalls unter Zwischenschaltung einer Getriebeeinrichtung, sonach mit einem einer Antriebseinrichtung zugeordneten Antriebselement gekoppelt werden, um eine das jeweilige Exzenterelement in eine Drehbewegung versetzende Antriebskraft bzw. ein entsprechendes Moment auf das jeweilige Exzenterelement zu übertragen. Typischerweise ist jeder Antriebsabschnitt und damit jedes Exzenterelement eigenständig mit einem einer Antriebseinrichtung zugeordneten Antriebselement gekoppelt, um eine das jeweilige Exzenterelement in eine Drehbewegung versetzende Antriebskraft bzw. ein entsprechendes Moment auf das jeweilige Exzenterelement zu übertragen, sodass die Exzenterelemente grundsätzlich unabhängig voneinander in eine Drehbewegung versetzbar sind.

Aus dem Vorstehenden ergibt sich, dass die Exzenterelemente, d. h. die Ringe bzw. Ringabschnitte relativ zueinander verdrehbar sein bzw. verdreht werden können. Die Exzenterelemente, d. h. die Ringe bzw. Ringabschnitte, können sonach um eine Drehachse, insbesondere um eine gemeinsame Drehachse, welche z. B. mit der Symmetrie- bzw. Zentralachse der ringartigen bzw. -förmigen Gehäuseeinrichtung zusammenfallen kann, drehbar gelagert sein. Die Exzenterelemente können dabei in die gleiche oder in unterschiedliche Drehrichtungen gedreht werden.

Um eine im Hinblick auf die Integration sowohl entsprechender Ringe bzw. Ringabschnitte als auch entsprechender Antriebsabschnitte baulich kompakte Realisierung der Exzenterelemente zu ermöglichen, können die Exzenterelemente eine L-artige bzw. -förmige Querschnittsgeometrie aufweisen, wobei jeweilige exzentrisch ausgebildete Ringe bzw. Ringabschnitte an einem bezüglich der Drehachse radial (weiter) innen liegenden Abschnitt und jeweilige Antriebsabschnitte an dem radial (weiter) äußeren Abschnitt angeordnet oder ausgebildet sein können.

Wie erwähnt, sind die Exzenterelemente typischerweise miteinander gekoppelt, wobei der exzentrisch ausgebildete erste Ring bzw. Ringabschnitt, diesen innenumfangsseitig kontaktierend innerhalb des exzentrisch ausgebildeten zweiten Rings bzw. Ringabschnitts angeordnet sein kann, sodass sich ein Verdrehen des ersten Rings bzw. Ringabschnitt relativ zu dem zweiten Ring bzw. Ringabschnitt aufgrund der exzentrischen Geometrie auf den zweiten Ring bzw. Ringabschnitt auswirkt, und umgekehrt. Dies kann im Hinblick auf eine entsprechende L-artige bzw. -förmige Querschnittsgeometrie der Exzenterelemente z. B. konstruktiv so gelöst sein, dass der zweite Ring bzw. Ringabschnitt, d. h. im Allgemeinen das zweite Exzenterelement, mit seinem Innenumfang auf dem Außenumfang des sich axial erstreckenden kurzen Abschnitts des ersten Rings bzw. -Ringabschnitts, d. h. im Allgemeinen des ersten Exzenterelements, angeordnet ist. Der erste Ring bzw. Ringabschnitt, d. h. im Allgemeinen das erste Exzenterelement, kann mit seinem Innenumfang, insbesondere gleitend gelagert, auf einer Wandung, insbesondere einer einen Boden bildenden Wandung, der Gehäuseeinrichtung angeordnet sein.

An oder in der Gehäuseeinrichtung kann wenigstens eine Antriebseinheit, welche z. B. als Elektromotor ausgebildet sein oder einen solchen umfassen kann, angeordnet oder ausgebildet sein, welche(r) eingerichtet ist, eine auf ein zu zentrierendes Extrusionswerkzeug auszuübende Zentrierkraft zu erzeugen. Im Lichte der vorstehenden Erläuterungen ist es denkbar, dass jedem Zentrierelement, d. h. jedem Exzenterelement, eine eigene Antriebseinheit zugeordnet ist, welche über ein entsprechendes Antriebsmittel mit einem bestimmten Exzenterelement gekoppelt ist, um Kräfte bzw. Momente zu übertragen, welche das jeweilige Exzenterelement in eine Drehbewegung versetzen.

Jeweilige Antriebseinheiten können sonach im Allgemeinen eingerichtet sein, eine Kraft bzw. ein Moment zu erzeugen, welche wenigstens ein Zentrierelement in eine Bewegung, insbesondere relativ zu einem zweiten Zentrierelement, vorzugsweise zu einem mit diesem bewegungsgekoppelten zweiten Zentrierelement, versetzt. Wenigstens ein in eine entsprechende Bewegung versetzbares bzw. versetztes Zentrierelement kann über wenigstens ein bewegbar gelagertes Stellelement, wie z. B. einen radial bezüglich der Drehachse ausgerichtet angeordneten Stellpin (dieser kann im Allgemeinen auch als Spannelement bezeichnet oder erachtet werden), mit dem zu zentrierenden Extrusionswerkzeug gekoppelt sein, sodass eine Drehbewegung des wenigstens einen Zentrierelements über das wenigstens eine Stellelement in einer auf das zu zentrierende Extrusionswerkzeug ausgeübten Zentrierkraft resultiert. Die Zentrierkraft wirkt typischerweise radial bezüglich der Drehachse, sodass das Stellelement dabei typischerweise radial gegen das zu zentrierende Extrusionswerkzeug, insbesondere radial gegen den Außenumfang des zu zentrierenden Extrusionswerkzeugs, bewegt wird, wodurch eine Zentrierung des Extrusionswerkzeugs ermöglicht ist.

Das wenigstens eine Stellelement kann, insbesondere im Bereich seines freien Endes, einen, insbesondere radial bezüglich einer Symmetrieachse des zu zentrierenden Extrusionswerkzeugs, gegen das zu zentrierende Extrusionswerkzeug bewegbaren Wirkabschnitt aufweisen, insbesondere um eine entsprechende Zentrierkraft auf das zu zentrierende Extrusionswerkzeug auszuüben.

Aus vorstehenden Erläuterungen ergibt sich, dass das wenigstens eine Zentrierelement, hierbei kann es sich beispielsweise um das weiter oben erwähnte zweite Exzenterelement handeln, mechanisch mit dem wenigstens einen Stellelement koppelbar oder gekoppelt ist. Das wenigstens eine Stellelement ist dabei typischerweise so gelagert, dass eine Drehbewegung des wenigstens einen Zentrierelements um eine Drehachse in eine bezüglich der Drehachse radiale Translationsbewegung des wenigstens einen Stellelements umgesetzt werden kann.

Das wenigstens eine Stellelement kann so gelagert sein, dass es ausschließlich in einem Bewegungsfreiheitsgrad, über welchen es gegen das zu zentrierende Extrusionswerkzeug bewegbar ist, bewegbar ist. Bei einem entsprechenden Bewegungsfreiheitsgrad kann es sich insbesondere um die bezüglich der Drehachse radiale Translationsbewegung des wenigstens einen Stellelements handeln.

Das wenigstens eine Stellelement kann lösbar, insbesondere austauschbar, an oder in der Gehäuseeinrichtung angeordnet oder ausgebildet sein. Derart ist es möglich, die Vorrichtung über das Vorsehen unterschiedlich langer Stellelemente, auf einfache Weise unterschiedlich zu konfigurieren, sodass sich mit der Vorrichtung unterschiedlich dimensionierte Extrusionswerkzeuge zentrieren lassen. Gleichermaßen ermöglicht die lösbare Anordnung bzw. Ausbildung des wenigstens einen Stellelements einen einfachen Austausch bzw. Wechsel eines Extrusionswerkzeugs.

Die Vorrichtung kann mehrere entsprechende Stellelemente, insbesondere in Umfangsrichtung bezüglich der ringförmigen Geometrie der Gehäuseeinrichtung verteilt angeordnete oder ausgebildete, aufweisen. Derart sind nicht nur Vorteile im Hinblick auf Effizienz und Genauigkeit der Zentrierung gegeben, sondern aufgrund redundanter Auslegung auch die Betriebssicherheit der Vorrichtung gesteigert. In einer konkreten, gleichwohl beispielhaften Ausführungsform kann die Vorrichtung drei in Umfangsrichtung bezüglich der ringförmigen Geometrie der Gehäuseeinrichtung gleichmäßig verteilt angeordnete oder ausgebildete Stellelemente umfassen.

Ein zweiter Aspekt der Erfindung betrifft eine Extrusionseinrichtung zur Extrusion eines Extrusionsmaterials, insbesondere eines Kunststoffmaterials, wobei die Extrusionseinrichtung wenigstens ein zentrierbares bzw. zu zentrierendes Extrusionswerkzeug, insbesondere eine Extrusionsdüse, und eine dem wenigstens einen Extrusionswerkzeug zugeordnete Vorrichtung gemäß dem ersten Aspekt der Erfindung umfasst, sodass sämtliche Ausführungen im Zusammenhang mit der Vorrichtung analog für die Extrusionseinrichtung gelten.

Das zentrierbare bzw. zu zentrierende Extrusionswerkzeug kann z. B. an einem, z. B. rohrartigen bzw. -förmigen, Materialausgang einer einen Extruderzylinder und wenigstens eine darin wenigstens drehbar gelagerte Extruderschnecke umfassenden Extrusionseinheit der Extrusionseinrichtung befestigt sein. Die Befestigung des Extrusionswerkzeugs an dem Materialausgang kann lösbar sein und z. B. über eine Schraubbefestigung realisiert sein.

Ein weiterer Aspekt der Erfindung betrifft ein Verfahren zur Zentrierung eines Extrusionswerkzeugs zur Extrusion eines Extrusionsmaterials, insbesondere eines Kunststoffmaterials, wobei im Rahmen des Verfahrens vermittels einer Vorrichtung gemäß dem ersten Aspekt der Erfindung ein Zentrieren des Extrusionswerkzeugs bezüglich einer Referenzachse, insbesondere einer Symmetrie- bzw. Zentralachse einer Extrusionseinrichtung, durchgeführt wird, sodass sämtliche Ausführungen im Zusammenhang mit der Vorrichtung analog für die Extrusionseinrichtung gelten.

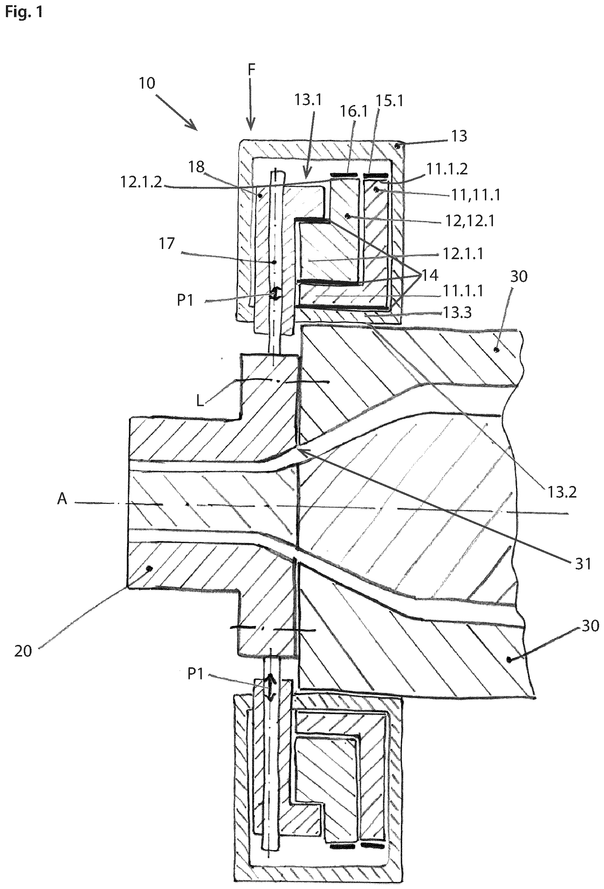

Weitere Merkmale und Einzelheiten der Erfindung werden nachfolgend unter Bezugnahme auf die in den Fig. gezeigten Ausführungsbeispiele nochmals beispielhaft erläutert. Dabei zeigen die Fig. 1 bis 3 jeweils eine Prinzipdarstellung einer Vorrichtung zu Zentrierung eines Extrusionswerkzeugs gemäß einem Ausführungsbeispiel.

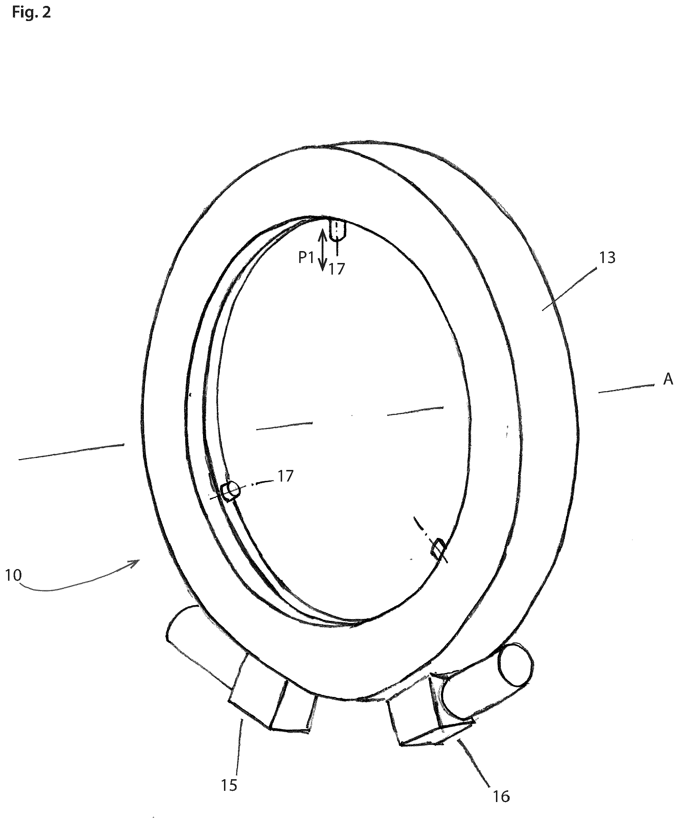

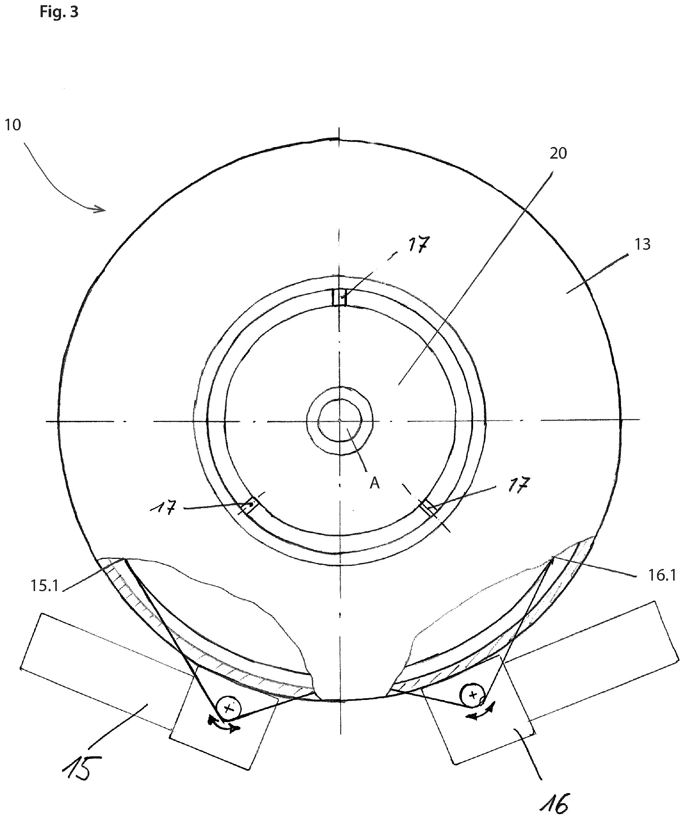

Die Fig. 1 bis 3 zeigen jeweils eine Prinzipdarstellung einer Vorrichtung 10 gemäß einem Ausführungsbeispiel, wobei die Vorrichtung 10 in Fig. 1 in einer quergeschnittenen Ansicht, in Fig. 2 in einer perspektivischen Ansicht und in Fig. 3 in einer Frontalansicht dargestellt ist.

Die Vorrichtung 10 dient zur Zentrierung eines Extrusionswerkzeugs 20 zur Extrusion eines Extrusionsmaterials, insbesondere eines Kunststoffmaterials. Die Vorrichtung 10 ist sonach im Allgemeinen dazu eingerichtet, ein Extrusionswerkzeug 20 zur Extrusion eines Extrusionsmaterials, insbesondere eines Kunststoffmaterials, wie z. B. eine Extrusionsdüse, welche typischerweise einen Bestandteil einer in Fig. 1 nur teilweise angedeuteten Extrusionseinrichtung 30 bildet, zu zentrieren. Unter einem Zentrieren des Extrusionswerkzeugs 20 ist insbesondere ein Ausrichten des Extrusionswerkzeugs 20 bezüglich einer Referenzachse A, wie z. B. einer Symmetrie- bzw. Zentralachse, eines Bauteils, insbesondere eines rotationssymmetrischen Bauteils der Extrusionseinrichtung 30, wie z. B. einer Exruderschnecke, eines Extruderzylinders oder eines Rohrkopfs, zu verstehen. Konkret kann ein Ausrichten ein koaxiales Anordnen einer Symmetrie- bzw. Zentralachse des zu zentrierenden Extrusionswerkzeugs 20 bezüglich einer entsprechenden Referenzachse A beinhalten.

Die Vorrichtung 10 umfasst in dem Ausführungsbeispiel zwei Zentrierelemente 11, 12, welche eingerichtet sind, eine Zentrierkraft auf das zu zentrierende Extrusionswerkzeug 20 auszuüben. Die Zentrierelemente 11, 12 sind sonach derart konfiguriert, um mit dem zu zentrierenden Extrusionswerkzeug 20 zusammenzuwirken, um eine Zentrierung des Extrusionswerkzeugs 20 herbeizuführen.

Die Vorrichtung 10 umfasst weiter eine, gegebenenfalls kurz als Gehäuse bezeichenbare, ein- oder mehrteilig ausgeführte Gehäuseeinrichtung 13. Die Zentrierelemente 11, 12 sind in dem Ausführungsbeispiel in der Gehäuseeinrichtung 13 angeordnet oder ausgebildet. Die Gehäuseeinrichtung 13 weist hierfür einen auch als Aufnahmeraum bezeichenbaren Gehäuseraum 13.1 auf, an oder in welchem insbesondere die Zentrierelemente 11, 12 angeordnet oder ausgebildet sind. Ergänzend können ein oder mehrere weitere Funktionskomponenten der Vorrichtung 10 an oder in der Gehäuseeinrichtung 13, d. h. insbesondere an oder in dem Gehäuseraum 13.1, angeordnet oder ausgebildet sein. Der Gehäuseraum 13.1 kann nach außen abgeschlossen sein, sodass die in dem Gehäuseraum 13.1 angeordneten oder ausgebildeten Funktionskomponenten der Vorrichtung 10 gegenüber äußeren Einflüssen, wie z. B. mechanischen, thermischen und/oder klimatischen Einflüssen, geschützt sind; insgesamt liegt damit auch eine baulich hochintegrierte Baugruppe vor.

Die Gehäuseeinrichtung 13 weist ein oder mehrere in Fig. 1 rein schematisch angedeutete Befestigungsschnittstellen 13.2 auf, vermittels welcher die Gehäuseeinrichtung 13, d. h. im Allgemeinen die Vorrichtung 10, an einem zu zentrierenden Extrusionswerkzeug 20 oder an einer ein zu zentrierendes Extrusionswerkzeug 20 aufweisenden Extrusionseinrichtung 30 befestigbar ist. Die Befestigungsschnittstellen 13.2 sind sonach eingerichtet, die Gehäuseeinrichtung 13 bzw. die Vorrichtung 10 an einem zu zentrierenden Extrusionswerkzeug 20 oder an einer ein zu zentrierendes Extrusionswerkzeug 20 aufweisenden Extrusionseinrichtung 30 zu befestigen. Derart ist es auf einfache und praktikable Weise möglich, die Vorrichtung 10 auch an einem bestehenden Extrusionswerkzeug 20 bzw. an einer bestehenden, ein zu zentrierendes Extrusionswerkzeug 20 aufweisenden Extrusionseinrichtung 30 zu befestigen und diese sonach mit der Vorrichtung 10 und damit im Allgemeinen einer Möglichkeit zur Zentrierung eines Extrusionswerkzeugs 20 nachzurüsten.

Die ein oder mehreren Befestigungsschnittstellen 13.2 können insbesondere eingerichtet sein, die Gehäuseeinrichtung 13 bzw. die Vorrichtung 10, insbesondere beschädigungs- bzw. zerstörungsfrei, lösbar, an einem zu zentrierenden Extrusionswerkzeug 20 oder an einer ein zu zentrierendes Extrusionswerkzeug 20 aufweisenden Extrusionseinrichtung 30 zu befestigen. Die ein oder mehreren Befestigungsschnittstellen 13.2 können hierfür insbesondere eingerichtet sein, die Gehäuseeinrichtung 13 bzw. die Vorrichtung 10, insbesondere beschädigungs- bzw. zerstörungsfrei lösbar, über form- und/oder kraftschlüssige Befestigungsarten an einem zu zentrierenden Extrusionswerkzeug 20 oder an einer ein zu zentrierendes Extrusionswerkzeug 20 aufweisenden Extrusionseinrichtung 30 zu befestigen; bei den ein oder mehreren Befestigungsschnittstellen 13.2 kann es sich sonach z. B. um Form- und/oder Kraftschlusselemente handeln bzw. können die ein oder mehreren Befestigungsschnittstellen 13.2 ein oder mehrere Form- und/oder Kraftschlusselemente umfassen. Entsprechende Form- und/oder Kraftschlusselemente können z. B. sein bzw. umfassen: Klemmelemente, Rastelemente, Schnappelemente, Spannelemente, Schraubelemente oder Nietelemente. Die Gehäuseeinrichtung 13 bzw. die Vorrichtung 10 lässt sich sonach z. B. über eine Klemm-, Rast- , Schnapp-, Spann, Schraub- oder Nietverbindung an einem zu zentrierenden Extrusionswerkzeug 20 oder an einer ein zu zentrierendes Extrusionswerkzeug 20 aufweisenden Extrusionseinrichtung 30 zu befestigen.

Anhand einer Zusammenschau der Fig. 1 und 2 ist ersichtlich, dass der Gehäuseraum 13.1 der Gehäuseeinrichtung 13 ringartig bzw. -förmig ausgebildet sein respektive eine ringartige bzw. - förmige Grundform aufweisen kann. Entsprechendes gilt in dem Ausführungsbeispiel auch für die Gehäuseeinrichtung 13, mithin kann auch die Gehäuseeinrichtung ringartig bzw. -förmig ausgebildet sein respektive eine ringartige bzw. -förmige Grundform aufweisen. Die Querschnittsgeometrie des Gehäuseraums 13.1 bzw. der Gehäuseeinrichtung 13 ist in dem Ausführungsbeispiel beispielhaft vieleckig, nämlich viereckig; derart ist ausreichend Platz gegeben, um die Zentrierelemente 11, 12 sowie gegebenenfalls zusätzliche weitere Funktionskomponenten der Vorrichtung 10 in dem Gehäuseraum 13.1 anzuordnen oder auszubilden.

Die Zentrierelemente 11, 12 sind in dem Ausführungsbeispiel als Exzenterelemente 11.1, 12.1, d. h. z. B. als Exzenterringe, ausgebildet bzw. umfassen solche. Konkret umfasst die Vorrichtung 10 in dem Ausführungsbeispiel zwei ineinander greifende Exzenterelemente 11.1, 12.1, nämlich ein gegebenenfalls auch als inneres Exzenterelement bezeichenbares erstes Exzenterelement 11.1 und ein gegebenenfalls auch als äußeres Exzenterelement bezeichenbares zweites Exzenterelement 12.1. Das erste Exzenterelement 11.1 kann einen exzentrisch ausgebildeten ersten Ring bzw. Ringabschnitt 11.1.1 aufweisen oder als solcher ausgebildet sein. Das zweite Exzenterelement 12.1 kann ebenso einen exzentrisch ausgebildeten zweiten Ring bzw. Ringabschnitt 12.1.1 aufweisen oder als solcher ausgebildet sein. Die beiden exzentrisch ausgebildeten Ringe bzw. Ringabschnitte 11.1.1, 12.1.1 sind miteinander gekoppelt. Insbesondere ist der erste Ring bzw. Ringabschnitt 11.1.1, diesen innenumfangsseitig kontaktierend innerhalb des zweiten Rings bzw. Ringabschnitts 12.1.1 angeordnet, sodass sich ein Verdrehen des ersten Rings bzw. Ringabschnitts 11.1.1, d. h. im Allgemein des ersten Exzenterelements 11.1, relativ zu dem zweiten Ring bzw. Ringabschnitt 12.1.1, d. h. im Allgemeinen des zweiten Exzenterelements 12.1, aufgrund der exzentrischen Geometrie auf den zweiten Ring bzw. Ringabschnitt 12.1.1, d. h. im Allgemeinen das zweite Exzenterelement 12.1, auswirkt, und umgekehrt. Zwischen den Kontaktflächen der beiden Ringe bzw. Ringabschnitte 11.1.1, 12.1.1, d. h. im Allgemeinen der beiden Exzenterelemente 11.1, 12.1, können, etwa zur Reduzierung von Reibung und Verschleiß, ein oder mehrere Gleitelemente 14 bzw. -flächen angeordnet oder ausgebildet sein.

Anhand von Fig. 1 ist weiter ersichtlich, dass die Exzenterelemente 11.1, 12.1 jeweils einen Antriebsabschnitt 11.1.2, 12.1.2 aufweisen können, welche eingerichtet sind, z. B. durch einen mechanischen Eingriff, mit einem einer Antriebseinrichtung 15, 16 zugeordneten Antriebselement 15.1, 16.1, wie z. B. einem Band, einer Kette oder einem Riemen, zusammenzuwirken, um eine das jeweilige Exzenterelement 11.1, 12.1 in eine Drehbewegung um eine Drehachse, vgl. die Referenzachse A, versetzende Antriebskraft bzw. ein entsprechendes Moment auf das jeweilige Exzenterelement 11.1, 12.1 zu übertragen. Jeweilige Antriebsabschnitte 11.1.2, 12.1.2 können sonach mit einem einer in den Fig. 2 und 3 beispielhaft gezeigten Antriebseinrichtung 15, 16, gegebenenfalls unter Zwischenschaltung einer Getriebeeinrichtung, zugeordneten Antriebselement 15.1, 16.1 gekoppelt werden, um eine das jeweilige Exzenterelement 11.1, 12.1 in eine Drehbewegung versetzende Antriebskraft bzw. ein entsprechendes Moment auf das jeweilige Exzenterelement 11.1, 12.1 zu übertragen. Typischerweise ist jeder Antriebsabschnitt 11.1.2, 12.1.2 und damit jedes Exzenterelement 11.1, 12.1 eigenständig mit einem einer Antriebseinrichtung 15, 16 zugeordneten Antriebselement 11.2, 12.2 gekoppelt, um eine das jeweilige Exzenterelement 11.1, 12.1 in eine Drehbewegung versetzende Antriebskraft bzw. ein entsprechendes Moment auf das jeweilige Exzenterelement 11.1, 12.1 zu übertragen, sodass die Exzenterelemente 11.1, 12.1 grundsätzlich unabhängig voneinander in eine Drehbewegung versetzbar sind.

Fig. 3 zeigt beispielhaft wie ein entsprechendes Antriebselement 15.1, 16.1 an eine entsprechende Antriebseinrichtung 15, 16 angekoppelt sein kann. Konkret zeigt Fig. beispielhaft eine Konfiguration, in welcher ein entsprechendes Antriebselement 15.1, 16.1 mit einem Abtriebselement 15.2, 16.2, wie z. B. einer Abtriebswelle, der jeweiligen Antriebseinrichtung gekoppelt ist, sodass Drehbewegungen des Abtriebselements 15.2, 16.2 zu Bewegungen des jeweiligen Antriebselement 15.1, 16.1 führen.

Aus dem Vorstehenden ergibt sich, dass die Exzenterelemente 11.1, 12.1, d. h. die Ringe bzw. Ringabschnitte 11.1.1, 12.1.1, relativ zueinander verdrehbar sein bzw. verdreht werden können. Die Exzenterelemente 11.1, 12.1 können sonach um die Drehachse, welche typischerweise eine gemeinsame Drehachse für die Exzenterelemente 11.1, 12.1 bildet und welche z. B. mit der Symmetrie- bzw. Zentralachse der ringartigen bzw. -förmigen Gehäuseeinrichtung 13 zusammenfallen kann, drehbar gelagert sein. Die Exzenterelemente 11.1, 12.1 können dabei in die gleiche oder in unterschiedliche Drehrichtungen gedreht werden.

Um eine im Hinblick auf die Integration sowohl entsprechender Ringe bzw. Ringabschnitte 11.1.1, 12.1.1 als auch entsprechender Antriebsabschnitte 11.1.2, 12.1.2 baulich kompakte Realisierung der Exzenterelemente 11.1, 12.1 zu ermöglichen, können die Exzenterelemente 11.1, 12.1, wie Fig. 1 beispielhaft zeigt, eine L-artige bzw. -förmige Querschnittsgeometrie aufweisen, wobei jeweilige exzentrisch ausgebildete Ringe bzw. Ringabschnitte 11.1.1 an einem bezüglich der Drehachse radial (weiter) innen liegenden Abschnitt und jeweilige Antriebsabschnitte 11.1.2, 12.1.1 an dem radial (weiter) äußeren Abschnitt angeordnet oder ausgebildet sein können.

Wie erwähnt, sind die Exzenterelemente 11.1, 12.1 miteinander gekoppelt, wobei der exzentrisch ausgebildete erste Ring bzw. Ringabschnitt 11.1.1, diesen innenumfangsseitig kontaktierend innerhalb des exzentrisch ausgebildeten zweiten Rings bzw. Ringabschnitts 12.1.1 angeordnet sein kann, sodass sich ein Verdrehen des ersten Rings bzw. Ringabschnitt 11.1.1 relativ zu dem zweiten Ring bzw. Ringabschnitt 12.1.1 aufgrund der exzentrischen Geometrie auf den zweiten Ring bzw. Ringabschnitt 12.1.1 auswirkt, und umgekehrt. Dies kann im Hinblick auf eine entsprechende L-artige bzw. -förmige Querschnittsgeometrie der Exzenterelemente 11.1, 12.1, wie Fig. 1 zeigt, konstruktiv so gelöst sein, dass der zweite Ring bzw. Ringabschnitt 12.1.1, d. h. im Allgemeinen das zweite Exzenterelement 12.1, mit seinem Innenumfang auf dem Außenumfang des sich axial erstreckenden kurzen Abschnitts des ersten Rings bzw. - Ringabschnitts 11.1.1, d. h. im Allgemeinen des ersten Exzenterelements 11.1, angeordnet ist. Der erste Ring bzw. Ringabschnitt 11.1.1, d. h. im Allgemeinen das erste Exzenterelement 11.1, kann mit seinem Innenumfang, insbesondere gleitend gelagert, auf einer Wandung, insbesondere einer einen Boden bildenden Wandung 13.3, der Gehäuseeinrichtung 13 angeordnet sein.

An oder in der Gehäuseeinrichtung 13 sind die entsprechenden Antriebseinheiten 15, 16, welche z. B. als Elektromotor ausgebildet oder einen solchen umfassen können, angeordnet oder ausgebildet sein. Wie erwähnt, ist in dem Ausführungsbeispiel jedem Zentrierelement, d. h. jedem Exzenterelement 11.1, 12.1, eine eigene Antriebseinheit 15, 16 zugeordnet, welche über ein entsprechendes Antriebsmittel 15.1, 16.1 mit einem bestimmten Exzenterelement 11.1, 12.1 gekoppelt ist, um Kräfte bzw. Momente zu übertragen, welche das jeweilige Exzenterelement 11.1, 12.1 in eine Drehbewegung versetzen. Konkret zeigt Fig. 2 eine beispielhafte Anordnung der Antriebseinheiten 15, 16 am Außenumfang der Gehäuseeinrichtung 13. In Fig. 2 ist das Extrusionswerkzeug 20 wie auch die Extrusionseinheit nicht gezeigt.

Die Antriebseinheiten 15, 16 sind sonach im Allgemeinen eingerichtet, eine Kraft bzw. ein Moment zu erzeugen, welche ein erstes Zentrierelement 11, 12 in eine Bewegung relativ zu dem mit diesem gekoppelten zweiten Zentrierelement 12, und/oder umgekehrt, versetzt. In dem Ausführungsbeispiel ist das zweite Zentrierelement 12 über wenigstens ein bewegbar gelagertes Stellelement 17, wie z. B. einen radial bezüglich der Drehachse (vgl. Referenzachse A) ausgerichtet angeordneten und in den Fig. schematisch dargestellten Stellpin (dieser kann im Allgemeinen auch als Spannelement bezeichnet bzw. erachtet werden), mit dem zu zentrierenden Extrusionswerkzeug 20 gekoppelt, sodass eine Drehbewegung des zweiten Zentrierelements 12 über das wenigstens eine Stellelement 17 in einer in Fig. 1 rein schematisch durch den Pfeil F angedeuteten, auf das zu zentrierende Extrusionswerkzeug 20 ausgeübten Zentrierkraft F resultiert. Die Zentrierkraft F wirkt also radial bezüglich der Drehachse, sodass das Stellelement 17 radial gegen das zu zentrierende Extrusionswerkzeug 20, insbesondere radial gegen den Außenumfang des zu zentrierenden Extrusionswerkzeugs 20, wie durch den Doppelpfeil P1 angedeutet bewegbar ist bzw. bewegt wird, wodurch eine Zentrierung des Extrusionswerkzeugs 20 ermöglicht ist.

Das Stellelement 17 kann einen, insbesondere radial bezüglich einer, typischerweise mit der Referenzachse A zusammenfallenden, Symmetrieachse des zu zentrierenden Extrusionswerkzeugs 20, gegen das zu zentrierende Extrusionswerkzeug 20 bewegbaren Wirkabschnitt aufweisen, insbesondere um eine entsprechende Zentrierkraft auf das zu zentrierende Extrusionswerkzeug 20 auszuüben.

Aus vorstehenden Erläuterungen ergibt sich, dass wenigstens ein Zentrierelement 11, 12, hierbei kann es sich, wie in dem Ausführungsbeispiel gezeigt, z. B. um das zweite Exzenterelement 12 handeln, mechanisch mit dem wenigstens einen Stellelement 17 koppelbar oder gekoppelt ist. Das wenigstens eine Stellelement 17 ist dabei typischerweise so gelagert, dass eine Drehbewegung des Zentrierelements 12 um die Drehachse in eine bezüglich der Drehachse radiale Translationsbewegung des wenigstens einen Stellelements 17 umgesetzt werden kann, welche in Fig. 1 durch den Doppelpfeil P1 angedeutet ist.

Das wenigstens eine Stellelement 17 kann so gelagert sein, dass es ausschließlich in dem Bewegungsfreiheitsgrad, über welchen es gegen das zu zentrierende Extrusionswerkzeug 20 bewegbar ist, bewegbar ist. Bei dem Bewegungsfreiheitsgrad kann es sich sonach um die bezüglich der Drehachse radiale Translationsbewegung des wenigstens einen Stellelements 17 handeln.

Das wenigstens eine Stellelement 17 kann lösbar, insbesondere austauschbar, an oder in der Gehäuseeinrichtung 13 angeordnet oder ausgebildet sein. Derart ist es möglich, die Vorrichtung 10 über das Vorsehen unterschiedlich langer Stellelemente 17, auf einfache Weise unterschiedlich zu konfigurieren, sodass sich mit der Vorrichtung 10 unterschiedlich dimensionierte Extrusionswerkzeuge 20 zentrieren lassen. Gleichermaßen ermöglicht die lösbare Anordnung bzw. Ausbildung des wenigstens einen Stellelements 17 einen einfachen Austausch bzw. Wechsel eines Extrusionswerkzeugs.

In dem Ausführungsbeispiel gemäß Fig. 1 ist beispielhaft gezeigt, dass ein Austausch des wenigstens einen Stellelements 17 über ein Öffnen der Gehäuseeinrichtung 13 und insbesondere über ein Lösen bzw. Befestigen einer Zentrierscheibe 18, an welcher das Stellelement 17 angeordnet oder befestigt ist, möglich ist.

Die Vorrichtung 10 weist typischerweise mehrere entsprechende Stellelemente 17, insbesondere in Umfangsrichtung bezüglich der ringförmigen Geometrie der Gehäuseeinrichtung verteilt angeordnete oder ausgebildete, auf. Derart sind nicht nur Vorteile im Hinblick auf Effizienz und Genauigkeit der Zentrierung gegeben, sondern aufgrund redundanter Auslegung auch die Betriebssicherheit der Vorrichtung 10 gesteigert. In einer konkreten, gleichwohl beispielhaften Ausführungsform kann die Vorrichtung 10 drei in Umfangsrichtung bezüglich der ringförmigen Geometrie der Gehäuseeinrichtung 13 gleichmäßig verteilt angeordnete oder ausgebildete Stellelemente 17 umfassen.

Anhand von Fig. 1 ist schließlich ersichtlich, dass das zentrierbare bzw. zu zentrierende Extrusionswerkzeug 20 z. B. an einem, z. B. rohrartigen bzw. -förmigen, Materialausgang 31 einer einen Extruderzylinder und wenigstens eine darin wenigstens drehbar gelagerte Extruderschnecke (beide nicht gezeigt) umfassenden Extrusionseinheit der Extrusionseinrichtung 30 befestigt sein kann. Die Befestigung des Extrusionswerkzeug 20 an der Extrusionseinheit der Extrusionseinrichtung 30 kann lösbar sein und z. B. über eine in Fig. 1 lediglich durch die Linie L angedeutete Schraubbefestigung realisiert sein.

Mit der Vorrichtung 10 lässt sich ein Verfahren zur Zentrierung eines Extrusionswerkzeugs 20 zur Extrusion eines Extrusionsmaterials, insbesondere eines Kunststoffmaterials, implementieren, wobei im Rahmen des Verfahrens vermittels der Vorrichtung 10 ein Zentrieren des Extrusionswerkzeugs 20 bezüglich einer Referenzachse A, insbesondere einer Symmetrie- bzw. Zentralachse einer Extrusionseinrichtung 30, durchgeführt wird.

Bestimmte Merkmale der Erfindung sind in den nachfolgenden Aspekten nochmals beispielhaft dargestellt:
1. Vorrichtung (10) zur Zentrierung eines Extrusionswerkzeugs (20) zur Extrusion eines Extrusionsmaterials, insbesondere eines Kunststoffmaterials, wobei die Vorrichtung (10) umfasst:
   eine Gehäuseeinrichtung (13), an oder in welcher ein oder mehrere Zentrierelemente (11, 12) angeordnet oder ausgebildet sind, wobei die ein oder mehreren Zentrierelemente (11, 12) eingerichtet sind, eine Zentrierkraft auf ein zu zentrierendes Extrusionswerkzeug (20) auszuüben, wobei die Gehäuseeinrichtung (13) ein oder mehrere Befestigungsschnittstellen (13.2) aufweist, vermittels welcher die Gehäuseeinrichtung (13) an einem zu zentrierenden Extrusionswerkzeug (20) oder an einer ein zu zentrierendes Extrusionswerkzeug (20) aufweisenden Extrusionseinrichtung (30) befestigbar ist.
2. Vorrichtung nach Aspekt 1, wobei die ein oder mehreren Befestigungsschnittstellen (13.2) eingerichtet sind, die Gehäuseeinrichtung (13) lösbar an einem zu zentrierenden Extrusionswerkzeug (20) oder an einer ein zu zentrierendes Extrusionswerkzeug (20) aufweisenden Extrusionseinrichtung (30) zu befestigen.
3. Vorrichtung nach Aspekt 1 oder 2, wobei die Gehäuseeinrichtung (13) einen ringartigen bzw. -förmigen Gehäuseraum (13.1) aufweist, in welchem die ein oder mehreren Zentrierelemente (11, 12) angeordnet oder ausgebildet sind.
4. Vorrichtung nach einem der vorhergehenden Aspekte, wobei die ein oder mehreren Zentrierelemente (11, 12) als Exzenterringe (11.1, 12.1), insbesondere als ineinander greifende Exzenterringe (11.1, 12.1), ausgebildet sind oder solche umfassen.
5. Vorrichtung nach einem der vorhergehenden Aspekte, wobei an oder in der Gehäuseeinrichtung (13) wenigstens eine Antriebseinheit (15, 16) angeordnet oder ausgebildet ist, welche eingerichtet ist, eine auf ein zu zentrierendes Extrusionswerkzeug (20) auszuübende Zentrierkraft zu erzeugen.
6. Vorrichtung nach Aspekt 5, wobei die wenigstens eine Antriebseinheit (15, 16) eingerichtet ist, eine Kraft zu erzeugen, welche wenigstens ein Zentrierelement (11, 12) in eine Bewegung, insbesondere relativ zu einem zweiten Zentrierelement (11, 12), vorzugsweise zu einem mit diesem bewegungsgekoppelten zweiten Zentrierelement (11, 12), versetzt, wobei das in eine entsprechende Bewegung versetzbare Zentrierelement (11, 12) über wenigstens ein bewegbar gelagertes Stellelement (17) mit dem zu zentrierenden Extrusionswerkzeug (20) koppelbar oder gekoppelt ist, sodass eine Bewegung des in eine entsprechende Bewegung versetzten Zentrierelements (11, 12) über das wenigstens eine Stellelement (17) zu einer auf das zu zentrierende Extrusionswerkzeug (20) ausgeübten Zentrierkraft führt.
7. Vorrichtung nach Aspekt 6, wobei das wenigstens eine Stellelement (17) einen, insbesondere radial bezüglich einer Symmetrieachse eines zu zentrierenden Extrusionswerkzeugs (20), gegen das zu zentrierende Extrusionswerkzeug (20) bewegbaren Wirkabschnitt aufweist, insbesondere um eine entsprechende Zentrierkraft auf das zu zentrierende Extrusionswerkzeug (20) auszuüben.
8. Vorrichtung nach Aspekt 6 oder 7, wobei das in eine entsprechende Bewegung versetzbare Zentrierelement (11, 12), insbesondere mechanisch, mit dem wenigstens einen Stellelement (17) koppelbar oder gekoppelt ist.
9. Vorrichtung nach einem der Aspekte 6 bis 9, wobei das Stellelement (17) an einer Zentrierscheibe (18) angeordnet oder befestigt ist.
10. Vorrichtung nach einem der Aspekte 6 bis 9, wobei das wenigstens eine Stellelement (17) ausschließlich in einem Bewegungsfreiheitsgrad, über welchen es gegen das zu zentrierende Extrusionswerkzeug bewegbar ist, bewegbar ist.
11. Vorrichtung nach einem der Aspekte 6 bis 10, wobei das wenigstens eine Stellelement (17) lösbar, insbesondere austauschbar, an oder in der Gehäuseeinrichtung (13) angeordnet oder ausgebildet ist.
12. Vorrichtung nach einem der Aspekte 6 bis 11, wobei sie mehrere, insbesondere in Umfangsrichtung bezüglich einer ringförmigen Geometrie der Gehäuseeinrichtung (13) verteilt angeordnete oder ausgebildete, Stellelemente (17) aufweist.
13. Extrusionseinrichtung (30) zur Extrusion eines Extrusionsmaterials, insbesondere eines Kunststoffmaterials, wobei die Extrusionseinrichtung (30) umfasst: wenigstens ein Extrusionswerkzeug (20), insbesondere eine Extrusionsdüse, und eine dem wenigstens einen Extrusionswerkzeug (20) zugeordnete Vorrichtung (10) nach einem der vorhergehenden Aspekte.
14. Verfahren zur Zentrierung eines Extrusionswerkzeugs (20) zur Extrusion eines Extrusionsmaterials, insbesondere eines Kunststoffmaterials, wobei im Rahmen des Verfahrens vermittels einer Vorrichtung (10) nach einem der vorhergehenden Aspekte 1 bis 12 ein Zentrieren des Extrusionswerkzeugs (20) bezüglich einer Referenzachse, insbesondere einer Symmetrie- bzw. Zentralachse einer Extrusionseinrichtung (30), durchgeführt wird.

## Patentansprüche

1. Vorrichtung (10) zur Zentrierung eines Extrusionswerkzeugs (20) zur Extrusion eines Extrusionsmaterials, insbesondere eines Kunststoffmaterials, wobei die Vorrichtung (10) umfasst:
eine Gehäuseeinrichtung (13), an oder in welcher ein oder mehrere Zentrierelemente (11, 12) angeordnet oder ausgebildet sind, wobei die ein oder mehreren Zentrierelemente (11, 12) eingerichtet sind, eine Zentrierkraft auf ein zu zentrierendes Extrusionswerkzeug (20) auszuüben, wobei die Gehäuseeinrichtung (13) ein oder mehrere Befestigungsschnittstellen (13.2) aufweist, vermittels welcher die Gehäuseeinrichtung (13) an einem zu zentrierenden Extrusionswerkzeug (20) oder an einer ein zu zentrierendes Extrusionswerkzeug (20) aufweisenden Extrusionseinrichtung (30) befestigbar ist.

2. Vorrichtung nach Anspruch 1, wobei die ein oder mehreren Befestigungsschnittstellen (13.2) eingerichtet sind, die Gehäuseeinrichtung (13) lösbar an einem zu zentrierenden Extrusionswerkzeug (20) oder an einer ein zu zentrierendes Extrusionswerkzeug (20) aufweisenden Extrusionseinrichtung (30) zu befestigen.

3. Vorrichtung nach Anspruch 1 oder 2, wobei die Gehäuseeinrichtung (13) einen ringartigen bzw. -förmigen Gehäuseraum (13.1) aufweist, in welchem die ein oder mehreren Zentrierelemente (11, 12) angeordnet oder ausgebildet sind.

4. Vorrichtung nach einem der vorhergehenden Ansprüche, wobei die ein oder mehreren Zentrierelemente (11, 12) als Exzenterringe (11.1, 12.1), insbesondere als ineinander greifende Exzenterringe (11.1, 12.1), ausgebildet sind oder solche umfassen.

5. Vorrichtung nach einem der vorhergehenden Ansprüche, wobei an oder in der Gehäuseeinrichtung (13) wenigstens eine Antriebseinheit (15, 16) angeordnet oder ausgebildet ist, welche eingerichtet ist, eine auf ein zu zentrierendes Extrusionswerkzeug (20) auszuübende Zentrierkraft zu erzeugen.

6. Vorrichtung nach Anspruch 5, wobei die wenigstens eine Antriebseinheit (15, 16) eingerichtet ist, eine Kraft zu erzeugen, welche wenigstens ein Zentrierelement (11, 12) in eine Bewegung, insbesondere relativ zu einem zweiten Zentrierelement (11, 12), vorzugsweise zu einem mit diesem bewegungsgekoppelten zweiten Zentrierelement (11, 12), versetzt, wobei das in eine entsprechende Bewegung versetzbare Zentrierelement (11, 12) über wenigstens ein bewegbar gelagertes Stellelement (17) mit dem zu zentrierenden Extrusionswerkzeug (20) koppelbar oder gekoppelt ist, sodass eine Bewegung des in eine entsprechende Bewegung versetzten Zentrierelements (11, 12) über das wenigstens eine Stellelement (17) zu einer auf das zu zentrierende Extrusionswerkzeug (20) ausgeübten Zentrierkraft führt.

7. Vorrichtung nach Anspruch 6, wobei das wenigstens eine Stellelement (17) einen, insbesondere radial bezüglich einer Symmetrieachse eines zu zentrierenden Extrusionswerkzeugs (20), gegen das zu zentrierende Extrusionswerkzeug (20) bewegbaren Wirkabschnitt aufweist, insbesondere um eine entsprechende Zentrierkraft auf das zu zentrierende Extrusionswerkzeug (20) auszuüben.

8. Vorrichtung nach Anspruch 6 oder 7, wobei das in eine entsprechende Bewegung versetzbare Zentrierelement (11, 12), insbesondere mechanisch, mit dem wenigstens einen Stellelement (17) koppelbar oder gekoppelt ist.

9. Vorrichtung nach einem der Ansprüche 6 bis 9, wobei das Stellelement (17) an einer Zentrierscheibe (18) angeordnet oder befestigt ist.

10. Vorrichtung nach einem der Ansprüche 6 bis 9, wobei das wenigstens eine Stellelement (17) ausschließlich in einem Bewegungsfreiheitsgrad, über welchen es gegen das zu zentrierende Extrusionswerkzeug bewegbar ist, bewegbar ist.

11. Vorrichtung nach einem der Ansprüche 6 bis 10, wobei das wenigstens eine Stellelement (17) lösbar, insbesondere austauschbar, an oder in der Gehäuseeinrichtung (13) angeordnet oder ausgebildet ist.

12. Vorrichtung nach einem der Ansprüche 6 bis 11, wobei sie mehrere, insbesondere in Umfangsrichtung bezüglich einer ringförmigen Geometrie der Gehäuseeinrichtung (13) verteilt angeordnete oder ausgebildete, Stellelemente (17) aufweist.

13. Extrusionseinrichtung (30) zur Extrusion eines Extrusionsmaterials, insbesondere eines Kunststoffmaterials, wobei die Extrusionseinrichtung (30) umfasst: wenigstens ein Extrusionswerkzeug (20), insbesondere eine Extrusionsdüse, und eine dem wenigstens einen Extrusionswerkzeug (20) zugeordnete Vorrichtung (10) nach einem der vorhergehenden Ansprüche.

14. Verfahren zur Zentrierung eines Extrusionswerkzeugs (20) zur Extrusion eines Extrusionsmaterials, insbesondere eines Kunststoffmaterials, wobei im Rahmen des Verfahrens vermittels einer Vorrichtung (10) nach einem der vorhergehenden Ansprüche 1 bis 12 ein Zentrieren des Extrusionswerkzeugs (20) bezüglich einer Referenzachse, insbesondere einer Symmetrie- bzw. Zentralachse einer Extrusionseinrichtung (30), durchgeführt wird.
